# EUROPEAN PATENT SPECIFICATION

(11) **EP 3 170 332 B1**
(45) Date of publication and mention of the grant of the patent: **20.11.2024**
(21) Application number: 15742502.6
(22) Date of filing: 15.07.2015
(51) Int. Cl.: H04W 16/28, H04W 24/02

(54) **METHOD FOR ADAPTIVE BEAM PLACEMENT IN WIRELESS SYSTEMS**
VERFAHREN ZUR ADAPTIVEN STRAHLPLATZIERUNG IN DRAHTLOSEN SYSTEMEN
PROCÉDÉ DE PLACEMENT DE FAISCEAU ADAPTATIF DANS DES SYSTÈMES SANS FIL

(30) Priority: 17.07.2014 US 201462025638 P
(43) Date of publication of application: 24.05.2017
(73) Proprietor: NEC Advanced Networks, Inc., Warren, New jersey 07059 (US)
(72) Inventor: CHEMBIL-PALAT, Ramesh, Millbrae, California 94030 (US); POTICNY, David M., Whippany, New Jersey 07891 (US); FENG, Yiping, Skillman, New Jersey 08558 (US); PINTO, Mark R., Menlo Park, California 94025 (US); BANU, Mihai, New Providence, New Jersey 07974 (US)
(74) Representative: Keenway Patentanwälte Neumann Heine Taruttis
(86) International application number: PCT/US2015/040565
(87) International publication number: WO 2016/011151

(56) References cited:
- US-A1- 2005 272 472
- US-A1- 2006 068 848
- US-A1- 2011 085 492
- US-A1- 2012 196 591
- US-A1- 2013 095 846

## Description

### FIELD OF THE INVENTION

Embodiments of the present invention generally relate to wireless systems using narrow beams in lieu of or in addition to conventional antenna radiation patterns and methods to use these narrow beams to increase the capacity of wireless systems.

### BACKGROUND

Many wireless systems such as radio or TV broadcast use omnidirectional antennas, i.e., antennas radiating 360 degrees in at least one plane. Other systems such as point-to-point microwave links use directional antennas, i.e. antennas radiating mostly within a cone or beam. The commercial cellular systems were first introduced with omnidirectional tower antennas. Later, the wireless operators migrated to a sectorized architecture using 3 directional antennas on the tower, each covering 120 degrees in azimuth and about 15-20 degrees in elevation.

The modem cellular network uses three sectors per cell as a virtual standard. This solution has served well the wireless operators in the past when voice communications dominated the wireless traffic. However, with the advent of smart phones and other smart mobile devices running applications with large wireless data consumption such as video on demand, the requirements on the wireless network capacity have well surpassed the capability of the cellular system. In principle, cell splitting by adding towers, base stations and antennas is a natural solution for increasing the network capacity but the high cost of this approach and the general public opposition to new cell towers present severe practical limitations.

Another natural solution for increasing the cellular network capacity is by expanding the electromagnetic (EM) spectrum used. This is also a high cost solution as
EM spectrum is scarce and expensive to acquire. In addition, this is a limited solution because only few frequency bands are available for cellular use.

An advanced signal processing method for increasing the cellular network capacity is based on Multiple-Input-Multiple-Output (MIMO) techniques. These methods rely on the use of multiple antennas at the base station and at the mobiles to take advantage of spatial diversity of EM propagation and reuse the EM spectrum. MIMO is employed extensively in 4G (4th generation) wireless networks such as WiMAX and LTE (Long Term Evolution). Unfortunately, in practice MIMO requires heavy signal processing and delivers only modest capacity improvements, as its performance is very sensitive to low signal-to-noise-and-interference ratio (SNIR) conditions, which are prevalent in the existing cellular environment.

A new method for increasing the cellular network capacity by a large amount without adding cell towers or spectrum is described in U.S. patent application 13/442,561. This method is based on the use of narrow, agile, scanning beams boosting the SNIR at all places in the sector and creating the possibility for spectrum reuse, similar to MIMO but without signal processing. In practice, the generation of narrow beams at the tower is possible by the low cost phased array technique described in US patent #8,61 1,959. However, the method in U.S patent application 13/442,561 requires a precise coordination between the beam placement and scanning and the scheduling of the communication times between the base station and the mobiles. A significant modification in the base station software is necessary to implement this coordination.

US 2013/095846 A1 discloses a system for facilitating improved macro network coverage for an area with a high user density is known. Further, from US 2011/085492 A1 a method of extending a wireless communication coverage area of a cellular base transceiver station is known.

From US 2005/272 472 A1 a wireless communication system is known. From US 2012/196 591 A1 a wireless network element is known.

Here we disclose yet other methods for increasing the cellular network capacity using narrow beams but without requiring any significant modifications in the base station software.

### SUMMARY

The invention is set out in the appended set of claims. Further embodiments are described by the dependent claims.

### BRIEF DESCRIPTION OF THE DRAWINGS

Fig. 1 depicts a schematic diagram of a cell, which is part of a typical cellular system, including base station processor running communication software called eNodeB, base station Radio Bank, and mobile stations called User Equipment or UEs.
Fig. 2 depicts a simplified schematic diagram of the Radio Bank of a typical cellular base station.
Fig. 3 depicts a simplified schematic diagram of a typical cellular base station Tx/Rx module.
Fig. 4 depicts a schematic diagram of a typical cellular sector with UEs distributed uniformly over the sector.
Fig. 5 depicts a schematic diagram of a typical cellular sector with UEs distributed non-uniformly over the sector.
Fig. 6 depicts a schematic diagram of a typical cellular sector with non-uniformly distributed UEs and sector illumination with narrow pencil (3D) beams covering areas with high density of UEs.
Fig. 7 depicts a schematic diagram of a typical cellular sector with non-uniformly distributed UEs and sector illumination with narrow wedge (2D) beams covering areas with high density of UEs.
Fig. 8 depicts a schematic diagram of a cellular system with 2D/3D beam forming capability and beam placing controlled by the eNodeB.
Fig. 9 depicts a schematic diagram of a cellular system with 2D/3D beam forming capability and beam placing controlled by the eNodeB and by an additional signal independent of the eNodeB.
Fig. 10 depicts a schematic diagram of a cellular system with 2D/3D beam forming capability and beam placing controlled by the eNodeB and an External Traffic Density Detector independent of the base station.
Fig. 11 depicts a schematic diagram of a cellular system with 2D/3D beam forming capability and beam placing controlled only by an External Traffic Density Detector independent of the base station.
Fig. 12 depicts a schematic diagram of a cellular system with 2D/3D beam forming capability and beam placing controlled by the eNodeB and by a Traffic Density Detector internal to the beam forming sub-system independent of the eNodeB.
Fig. 13 depicts a schematic diagram of a cellular system with 2D/3D beam forming capability and beam placing controlled only by a Traffic Density Detector internal to the beam forming sub-system independent of the eNodeB.
Fig. 14 depicts a schematic diagram of a cellular system with 2D/3D beam forming capability and beam placing controlled by an External Traffic Density Detector independent the base station and by a Traffic Density Detector internal to the beam forming sub-system independent of the eNodeB.
Fig. 15 depicts a schematic diagram of a cellular system with 2D/.3D beam forming capability and beam placing controlled by the eNodeB, by an External Traffic Density Detector independent the base station and by a Traffic Density Detector internal to the beam forming sub-system independent of the eNodeB.
Fig. 16 is a flow chart illustrating the operation of the system according to a claimed embodiment.

### DETAILED DESCRIPION

### Basic Architecture of a Cellular System

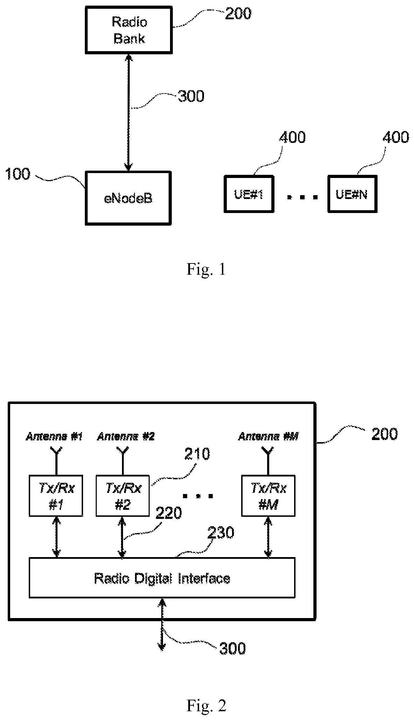

Fig. 1 illustrates the components of a cell, which is a building block of a typical cellular network. The wireless terminals 400 called User Equipment (UE) are connected via wireless links (not shown in Fig. 1) to a base station comprising processor 100 called eNodeB, Radio Interface Bus 300 and Radio Bank 200. The UEs may be mobile devices such as cell phones, tablets, car phones, etc. or stationary devices such as computers, monitoring stations, security devices, etc. The wireless links between the base station and the UEs are generated and are managed by the base station radios in the Radio Bank 200 and by radios inside the UEs. The processor eNodeB 100 connects to other nodes in the cellular network via communication links called backhaul.

In general, the Radio Bank 200, shown in more details in Fig. 2, contains M radio Transmit/Receive modules (Tx/Rx Modules) 210, where M is an integer, a Radio Digital Interface 230, and M Internal Buses 220. The processor 100 transmits and receives digital signals from and to each Tx/Rx Module 210 via the Radio Interface Bus 300 and the Internal Buses 220. Typically, M is 1-4, but systems with larger number of radios are possible.

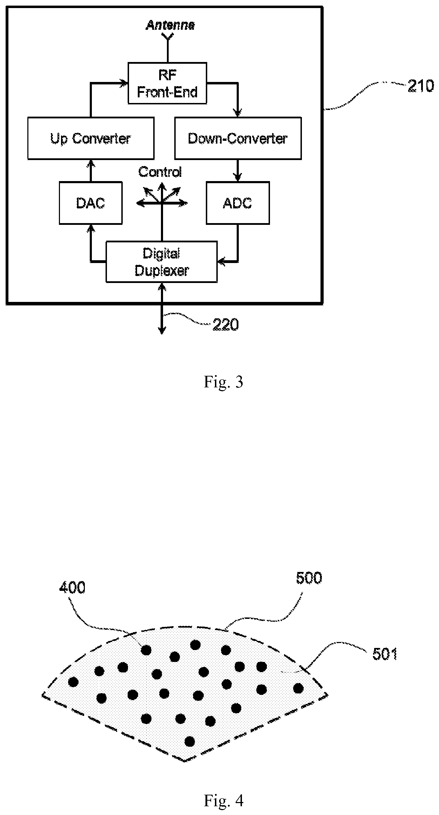

A simplified Tx/Rx Module 210 is shown in Fig. 3. The main functions of this module are to convert digital signals into radio frequency (RF) signals and vice versa and to couple the RF signals to and from the antenna. The transmitter part of the Tx/Rx Module includes a digital-to-analog (DAC) converter and a frequency Up-Converter while the receiver part of the Tx/Rx Module includes a frequency Down-Converter and an analog-to-digital (ADC) converter. A Digital Duplexer connects the transmit/receive paths to the Internal Bus 220 and an RF Front-End connects the transmit/receive paths to the antenna. The RF Front-End contains a receiver low noise amplifier, a transmitter power amplifier, and several RF filters and switches.

### Peak and Average Rates and Spectrum Efficiency

Considering a typical wireless cell as in Fig. 1, the cell wireless traffic over a certain period is the total amount of information (e.g., measured in bits) flowing during that period between all UEs serviced by the base station and the respective base station. There is a downstream cell traffic, i.e., data flowing from the base station to the UEs, and an upstream cell traffic, i.e., the data flowing from the UEs to the base station. In Frequency Division Duplexing (FDD) systems, upstream and downstream cell traffic flow continuously and simultaneously while in Time Division Duplexing (TDD) systems the upstream and downstream traffic flow successively in separate bursts, not overlapping in time.

If the period for which we calculate or measure the cell traffic is short, the resulting cell traffic value divided by the respective period is a good approximation of the instantaneous cell traffic bit-rate (e.g. measured in bits-per-second) or simply "cell rate" at any time within that period. In general, the upstream cell rate is different from the downstream cell rate and each varies widely in time. For example, during night hours, they are usually low and may even go to zero occasionally but at busy day hours, they reach much higher values. In addition, the cell rates may change very rapidly. For example, a base station covering a highway would experience a sudden increase in data flow when a road traffic jam forces many cars to a full stop, motivating drivers and passengers to use their phones. Similarly, the end of a sports or music event in a public arena typically triggers a large peak in the cell rate for the base station covering that area.

In a similar manner, we define a sector rate (upstream and downstream) as the traffic bit rate the base station uses to communicate with the mobiles in a sector. Since the instantaneous cell/sector rate can vary quickly and by large amounts, it is useful to also consider the average cell/sector rates calculated or measured over a certain period. For example, the instantaneous sector rate handled by a base station may vary widely between 0.1 bits/Hz to 1 bits/Hz over one hour but the average cell rate may be 0.2 bits/Hz, assuming most of the time during that hour the instantaneous cell rate is closer to the lower bound. In general, the instantaneous and average cell rates are the sums of the respective sector rates because the base station handles the sectors simultaneously (separate radio per each sector). Therefore, it is sufficient to discuss sector rates, as all arguments and conclusions are also valid for cell rates.

Theoretically, the instantaneous sector rate can be only as high as a maximum value given by the wireless standard and the EM bandwidth used. The typical communication protocols of wireless systems specify a finite set of data rates (downstream and upstream) allowed for communication between the base station and UEs. The actual data rate used at any time for each UE depends on the respective wireless link quality and is set by the base station dynamically. For example, if the SNIR of a link is smaller than a certain minimum number, the base station does not initiate any data transfers with the UE. If the link SNIR is higher than the minimum but less than the next higher level, the base station initiates the data exchange at the minimum specified rate. For higher SNIRs, higher data rates are used respectively, each rate corresponding to a SNIR band, up to a maximum rate. The SNIR band for the top rate is unbounded, i.e., any increase in SNIR does not result in higher data rates. Assuming the highest SNIR is available for the entire EM bandwidth used, the sector instantaneous rate reaches a maximum. At this time, the base station or the cell traffic are said to reach "peak capacity".

In practice, current base stations reach peak capacity only very rarely even if the network traffic demands are high. In fact, the average rate in typical sectors is often smaller than the maximum rate by an order of magnitude or more. The main reason for this major shortcoming is the poor quality (low SNIR) of most wireless links between the base station and the individual UEs, which is a direct consequence of the propagation limitations of wireless signals in current wireless systems. First, the signals are subject to path loss, which increases rapidly with the distance. Second, the signals encounter multiple reflections from ground clutter such as buildings, bridges, trees, etc. producing further loss, dispersion, and fading. Third, undesired signals from adjacent cells or other sources produce interference and noise. Therefore, most of the time the base stations are forced to communicate with the UEs at data rates, which are much smaller than the peak rates allowed by the standard, hence the resulting small average sector rates.

Since EM spectrum is a very valuable resource in wireless communications, it is of great interest to calculate how efficiently the spectrum is used. The peak spectrum efficiency is the maximum sector rate divided by the EM bandwidth. The average spectrum efficiency is the average sector rate divided by the EM bandwidth. The peak and average spectrum efficiencies are measured in bits-per-second-per-Hertz (b/s/Hz). The low SNIR conditions producing low average sector rates compared to the peak rate also produce low average spectrum efficiency compared to the peak spectrum efficiency.

### Increasing the Average Spectrum Efficiency

Applying methods to increase the sector average spectrum efficiency is most important and beneficial to cellular system operators and users because increased average rates carry more traffic for the same EM bandwidth and network infrastructure. Any other method of increasing the sector average rates without increasing the spectrum efficiency requires either expensive acquisition of additional EM spectrum or costly infrastructure expansions such as adding cell towers, base stations and related equipment.

The traditional way for increasing the spectrum efficiency has been the migration from one generation of wireless systems to more advanced generations. This was motivated by the fact that using more complex modulation techniques theoretically increases the peak spectrum efficiency of the system. However, the practical limitations in the wireless link SNIR have produced far less improvements in the average spectrum efficiency. Even the introduction of MIMO techniques has not increased the average spectrum efficiency but only moderately due to the same prevalent low SNIR conditions. In addition, MIMO imposes large penalties in power dissipation and UE talk time due to heavy signal processing requirements. Finally, many attempts to develop and deploy processing-intensive beam forming technology have been even less successful than MIMO in improving the average spectrum efficiency. It is important to mention that the classical beam forming techniques use few antennas and rely mostly on interference cancellation rather than on the use of narrow beams, despite the name.

The method of agile beams described in U.S. patent application 13/442,561 introduces a new dimension for solving the average spectrum efficiency problem. The use of narrow pencil beams results in significantly larger SNIR from the start. These beams, also known as 3D beams, focus the energy into solid angles which are narrow both in azimuth and elevation increasing the UE received signal level and reducing fading and dispersion by eliminating many of the multi-paths. Moreover, use of narrow pencil beams in adjacent sectors minimizes sector-to-sector interference. However, the penalty for boosting the SNIR uniformly over the entire sector is a strict condition to coordinate accurately in real time the beam placing and scanning with the data flow from/to each UE. This requires software capabilities in the base station guaranteeing proper scheduling of the UE transmit and receive time slots. This system increases the average spectrum efficiency when the UEs 400 are distributed uniformly in the sector 500, as shown in Fig. 4.

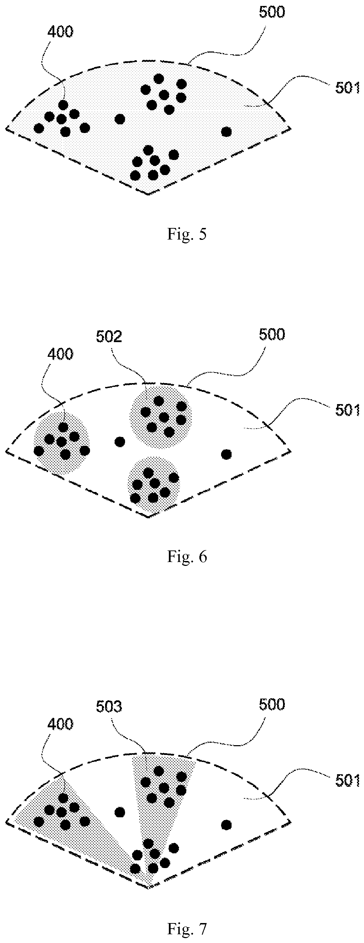

In practice, there are many instances when having high SNIR at all points in the sector is not necessary to increase significantly the sector average spectrum efficiency. For example, if a large percentage of UEs 400 are present in a few small areas of the sector 500, as shown in Fig. 5, just by increasing the SNIR in those areas alone is sufficient to boost the sector average spectrum efficiency. Similarly, if no UEs or few UEs are in a different area of the sector, covering that area with low SNIR has no significant impact in the average spectrum efficiency. For example, in Fig. 5 where the UEs are grouped in several small areas, covering the sector with EM radiation 501, which delivers low SNIR everywhere, will produce very low sector average spectrum efficiency. However, placing narrow pencil beams 502 to the areas where the UEs are present as in Fig. 6, will clearly improve the sector spectrum efficiency significantly because most UEs experience better SNIR. The few UEs outside the areas covered by the beams will continue to operate with low individual average spectral efficiency but their contribution to the sector average spectrum efficiency is small. This effect is highly reduced when placing narrow beams in the case of Fig. 4 where the UEs 400 are distributed uniformly. Narrow pencil beams placed anywhere in the sector leave many UEs outside the high SNIR areas, thus the increase in sector average spectrum efficiency is not large.

Fig. 7 shows the case of attempting to boosts the local SNIR with wedge beams 503, which are narrow in azimuth but wide in elevation. These beams, also known as 2D beams, are not as effective as pencil (3D) beams in raising the sector average spectral efficiency when most UEs are grouped in small areas.

We conclude that in general for non-uniform traffic situations with many UEs in a few small areas, a non-uniform SNIR sector distribution matching the UE distribution generates higher average spectrum efficiency than a uniform SNIR distribution or a non-uniform SNIR distribution not matching the UE distribution. This observation is the foundation of the present invention with the implied assumption that the beams used for creating SNIR distributions are narrow. Otherwise, the SNIR improvements are not significant. Furthermore, if the UE distribution in the sector changes in time, maintaining the SNIR distribution to a previous optimum will surely produce lower average spectrum efficiency. However, updating the SNIR distribution so as to match the new UE distribution will preserve high average spectrum efficiency, assuming the new UE distribution is still non-uniform with many UEs grouped in small areas. In order to utilize this concept, we next describe methods for generating narrow beams and for placing them so as to create SNIR distributions matching the UE distributions.

### Wide Beams Generated by Conventional Tower Antennas

The conventional base station antennas produce directional radiation patterns or beams that cover the entire 120-degree sector and are minimum (ideally zero) outside the sector. For the purpose of this specification, these beams are called "wide". An antenna radiation pattern that would cover only a small portion of the conventional 120-degree cellular sector (e.g., one-tenth of the sector or smaller area) if used instead of the regular wide beam is called a "narrow" beam. Such narrow beams can be generated with dish antennas or two-dimensional antenna arrays.

Typical conventional sector antennas generating a wide beam are built with one or few vertical columns of antenna elements, each element radiating in a beam wider than the 120-degree sector. A network of cables and phase shifters feeds these antenna elements from a single radio frequency (RF) input such that the overall radiation pattern of the sector antenna, which is the superposition of the beams from all the antenna elements, is contained almost fully within the 120-degree sector.

From the antenna vantage point, such as high on a cell tower, pointing the radiation towards the ground area of the sector requires focusing the radiation on a relatively narrow angle in elevation but wider angle in azimuth. This is the reason why vertical columns of antenna elements are used in typical sector antennas. The resulting aperture of the sector antenna is large in azimuth and small in elevation . The wide beams of the antenna elements interfere constructively in elevation only within a narrow angle and interfere destructively in elevation outside that narrow angle. They also interfere constructively in azimuth over a wide angle and interfere destructively in azimuth outside that wide angle.

In practice, the wide beam thus created covers the sector with non-uniform SNIR at ground level, which is maximum somewhere inside the sector far from the sector boundaries and much smaller at the sector boundaries. This is necessary to minimize mutual interference between adjacent sectors and cells. As per discussion in the previous section, in the vast majority of cases, the SNIR distribution from a sector antenna will not match the UE distribution resulting in small sector spectrum efficiency. In fact, in the common case when the UE distribution includes groups of UEs at the sector boundaries, the spectrum efficiency gets even lower.

Clearly, the use of conventional sector antennas with fixed wide beams is non-optimum for spectrum efficiency. This further explains the low average spectrum efficiency experienced in practice by most sectors. A modest improvement of this situation is achieved by using mechanical/electrical tilt, rotation, and fanning technologies. In the tilting case, the antennas are designed with mechanical or electromechanical means to change the position of the peak SNIR projection on the ground further or closer to the tower by tilting the antenna radiation pattern in elevation. Some of these antennas called RET (Remote Electrical Tilt) can be adjusted electrically from distance. A common RET design is with electrical motors placed on the antenna body to actuate a mechanism, which changes the electrical properties of the RF feed network to the antenna elements such as to accomplish the desired effect. Similar electromechanical designs can produce physical rotations of the entire antenna body in azimuth called panning and fanning effects, i.e. changing the beam width in azimuth.

### Transmitted and Received Rays

A precise way of describing the antenna radiation pattern is by considering the angle of departure (AOD) of plane waves propagating from the antenna. In general, any 3-dimensional antenna radiation pattern transmitted can be decomposed into a superposition of plane waves, each carrying a portion of the antenna electro-magnetic (EM) power on various AODs. These plane waves are also called "rays". In general, the strengths of these rays vary with the AOD and become negligible or zero outside a solid angle on which the antenna is designed to focus. For conventional cellular antennas, covering an entire 120-degree sector, the AODs of all rays with non-negligible energy form a solid angle as large as the visual field of the sector from the antenna position on the tower. Some cellular antennas are designed to create narrower beams for coverage of smaller areas than standard 120-degre sectors.

Usually, antennas are built as reciprocal electrical systems, i.e., they have identical transmit and receive radiation patterns. Therefore, for each plane wave transmitted at an AOD, a corresponding identical plane wave can be received at an angle of arrival (AOA) equal to the respective AOD. Assuming this reciprocity between transmitted and received electromagnetic energy is valid in all cases discussed here, for the rest of this specification only AOD and transmitted rays will be mentioned for simplicity but all following discussions, arguments, and claims are also intended for AOA and receiving rays.

Antenna gain along a certain AOD is defined as the ratio between the power of the transmitted ray in the respective AOD and the power of a hypothetical transmitted ray in any direction from a hypothetical antenna radiating equally in all directions (isotropic radiation) the same total EM power as the antenna under consideration. Usually, antenna gain is measured in decibels (dB), in accordance with the usual practice for power ratios. In order to indicate specifically that this gain is calculated with respect to an isotropic radiator, the dB unit of antenna gain is called decibels-isotropic or "dBi". The antenna elements used in sector antennas have 3-6 dBi maximum gains. Typical 120-degree sector antennas with 12 elements have 15-17 dBi maximum gains. Planar arrays with 96 antenna elements (e.g., 12x8) have about 25 dBi maximum gain. Dish antennas used in microwave point-to-point links have maximum gains as high as 30-40 dBi.

The concept of antenna gain in a direction allows the precise definition of beams and direction of beams. For the purpose of this specification, a beam is the antenna radiation pattern inside a specific solid angle having the vertex at the center of the antenna and satisfying three conditions. These conditions are: a) the direction with maximum antenna gain is inside this solid angle, b) the antenna gains in all other directions within this solid angle are smaller than the maximum gain by no more than 3dB, and c) the antenna gains in all directions outside this solid angle are smaller than the maximum gain by more than 3dB. The direction for maximum gain defines the beam direction.

### Propagation of Rays

The wide beams generated by conventional cellular antennas contain rays with a large AOD variation. In the unusual case where there are no obstacles in the sector and all UEs are in line-of sight (LOS), only a group of rays with close AODs reaches each UE. The signal loss to each UE is large due to transmitted energy dispersion in a wide solid angle, but there is little or no multi-path fading as all rays reaching any UE have almost identical paths. However, in the more common case when the sector contains natural and manmade clutter producing ray reflections and/or some of the EUs are in non-line-of sight (NLOS) such as behind buildings or natural obstacles, several groups of rays reach each UE, typically. Within each group, the rays have similar paths but rays from different groups have rather dissimilar paths. This produces strong multi-path fading in addition to loss. Loss and fading are detrimental effects for the SNIR in the sector.

Narrow beams can be created by several methods including using two-dimensional arrays of radiating (antenna) elements. The rays in narrow beams have only a small variation in AOD, naturally. Consequently, these rays propagate through similar paths in LOS or NLOS situations and in sectors with or without clutter. The loss in narrow beams is smaller than in wide beams due to less spatial dispersion and the multi-path fading is reduced due to fewer dissimilar paths reaching the UEs.

### Beam Pointing

As defined previously, the direction of a beam is the direction considered from the antenna position, for which the antenna gain is maximum. Stated in an equivalent manner, the beam "points" in a direction, which is the direction with maximum antenna gain.

The direction of a beam can be changed by purely mechanical means, by mixed mechanical and electrical means, or by purely electrical means. For example, conventional sector antennas are mounted on cellular towers with mechanical fixtures that allow adjustment of the antenna elevation angle or tilt such that the antenna wide beam points at a convenient place in the sector. This purely mechanical way for pointing the beam is limited to very rare adjustments. The RET antennas provide an example of beam pointing adjustment in elevation by mixed mechanical and electrical means, as described earlier. The beam direction adjustment of these antennas can be performed often, albeit slowly.

Phased arrays such as those used in RADARs generate narrow 3D beams that can be pointed in many directions very rapidly by purely electrical means. Moving the beam direction of phased arrays, also known as "beam steering", is achieved by changing the phases of the signals applied to the antenna elements. In general, phased arrays can generate multiple independent narrow beams, that are independently steerable. For this reason, phased arrays are suitable for use as infrastructure antennas in wireless communications systems as they can create non-uniform SNIR patterns on the ground with small areas where SNIR values are high. This was shown earlier to be an effective method for increasing the average spectrum efficiency when the wireless traffic pattern is non-uniform.

### Beam Placement Control

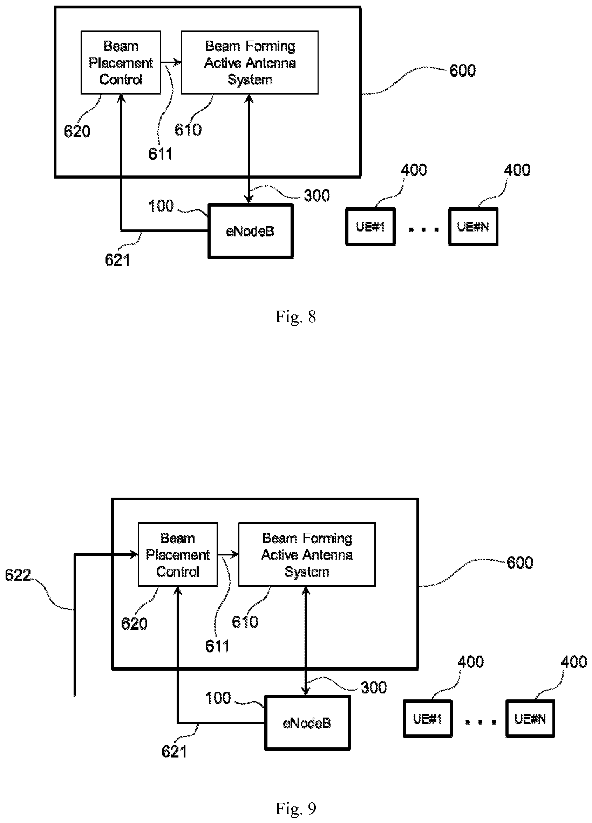

Fig. 8 shows the components of a cell in a typical cellular network with the Radio Bank 200 from Fig. 1 replaced by a more complex radio bank 600 called BFS Radio Bank, which adds beamforming and beam steering functions. The internal Beam Forming Active Antenna System 610 provides beam forming and the internal Beam Placement Control 620 provides beam steering. If the Beam Forming Active Antenna System 610 is a phased array, the Beam Placement Control 620 provides phase and magnitude values for the signals transmitted or received by 610.

The eNodeB 100 controls the pointing direction of the beam and the respective beam placement on the ground via appropriate control signals sent over control line 621. These control signals may be simple codes corresponding to various predetermined beam positions. In this case, all phase and magnitude information for beam forming is already present in the BFS radio bank 600. Another example of control signals is the entire set of phase and magnitude numbers needed by the Beam Forming Active Antenna System 610 to create beams. The Beam Placement Control block 620 controls the Beam Forming Active Antenna System 610 via an internal control line 611.

The base station in Fig. 8, comprising eNodeB 100, Radio Interface Bus 300, BFS Radio Bank 600, and control line 621 requires an additional functionality not necessary in the base station in Fig. 1 (blocks 100, 300, and 600) in order to select the directions of the beams generated by the BFS Radio Bank. As discussed before, the placement of these beams has important consequences for the sector average spectrum efficiency when the wireless traffic is non-uniform. Therefore, it is important to find the optimum beam placement to obtain as high average spectrum efficiency as possible. Furthermore, this optimum beam placement must be changed adaptively to match the traffic pattern.

As a matter of normal operation, the eNodeB has detailed SNIR and data rate information for every link to the UE 400 it serves. Therefore, the eNodeB can calculate the instantaneous and average spectrum efficiencies at any time. Moreover, the eNodeB can record the history of these parameters and analyze their statistics over the hours of the day and over longer periods including seasonal changes. Such recordings and analysis may be done automatically or in combination with human intervention. In addition, correlations between these statistics and the physical locations of the UEs can be performed. The eNodeB has several means to find the physical locations of UEs such as GPS coordinate reporting by UEs or triangulation techniques. The final goal of such statistical calculations is to generate maps of traffic patterns and direct the beams such as to match the traffic patterns with similar SNIR patterns.

A method to obtain traffic pattern maps quickly and easily is by using a narrow beam such as generated by a phased array. This beam scans slowly the entire sector while the eNodeB calculates the spectrum efficiency in the area covered by this beam for each beam position. After one or several such scans, the eNodeB determines the directions for which the beam increases the spectrum efficiency, i.e. the directions where the wireless traffic is clustered, e.g. directions in which communications density experiences peaks or maximums. Then, the eNodeB directs all available beams in as many directions with high traffic as possible. The same procedure could be done at different times of the day and on different days of the year to generate traffic pattern maps. After these maps are available, the beam placement could be programed without further calculations. However, if the average spectrum efficiency deteriorates, the traffic maps must be updated with the same procedure as before.

The base station in Fig. 8 is fully responsible for beam placing, according to the methods described above or similar. However, it is possible to design the Beam Placement Control 620 with control lines 622 in addition to control lines 621, as shown in Fig. 9. In this case, a system other than the base station could form and point the beams.

### External Traffic Density Detector

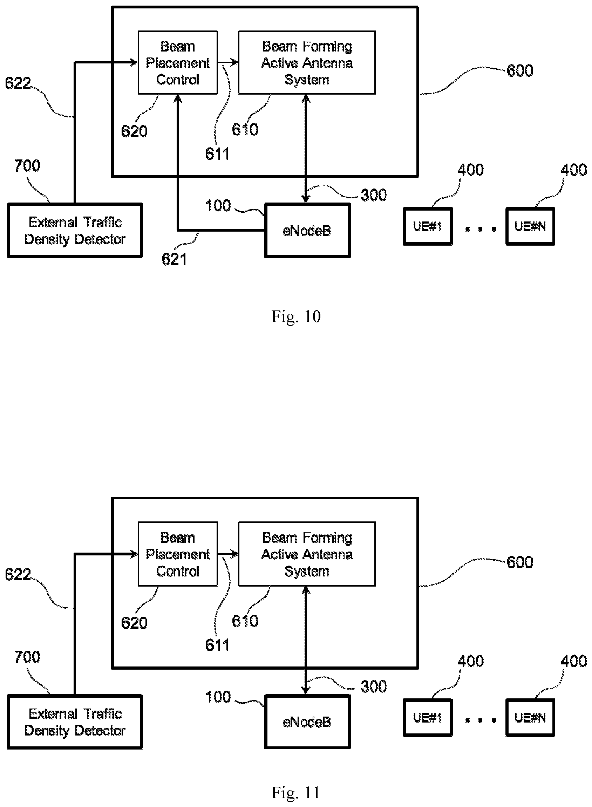

The method of beam scanning with spectrum efficiency monitoring as well as the methods of statistical calculations for generating traffic maps described above are examples of a general class of methods for detecting the traffic density in the sector. A hardware, firmware, software or any mix thereof supporting such a method is called a "Traffic Density Detector". The base station in Fig. 8 implicitly contains an eNodeB-based Traffic Density Detector to determine the correct placement of the beams. In order for the system in Fig. 9 to operate properly, an External Traffic Density Detector 700 must be connected as in Fig. 10. An example of External Traffic Density Detector is an independent server (not part of eNodeB) receiving link quality and data rate values from software running in UEs. The reported information could be instantaneous values or averages over a period. The UEs communicate with the server via the standard channels just like a regular client of the cellular system.

If the placement of the beams is under control of both the eNodeB and the External Traffic Density Detector as in Fig. 10, care must be taken to avoid unstable operational loops when eNodeB and the External Traffic Density Detector attempt to steer the beams against each other. A solution to this potential problem is to assign the eNodeB and the External Traffic Density Detector the control of different beams. For example, the eNodeB may be programmed to place a few beams in several known locations with high traffic at various times of the day and an External Traffic Density Detector may be used for additional beam placements when unpredictable high traffic density occurs in portions of the sector.

If an External Traffic Density Detector is used, it is no longer necessary to involve the eNodeB in controlling the beamforming and beam steering functions. Fig. 11 shows a system in which the eNodeB is connected to the BFS Radio Bank 600 only via the Radio Interface Bus 300. In this case, the External Traffic Density Detector 700 performs all beam control functionality in the system. This configuration is important in practice for retrofitting the conventional system of Fig. 1 with a BFS Radio Bank and introducing optimum beamforming and steering functionality (to get high spectrum efficiency) without any changes in the eNodeB but simply by adding an External Traffic Density Detector.

### Internal Traffic Density Detector

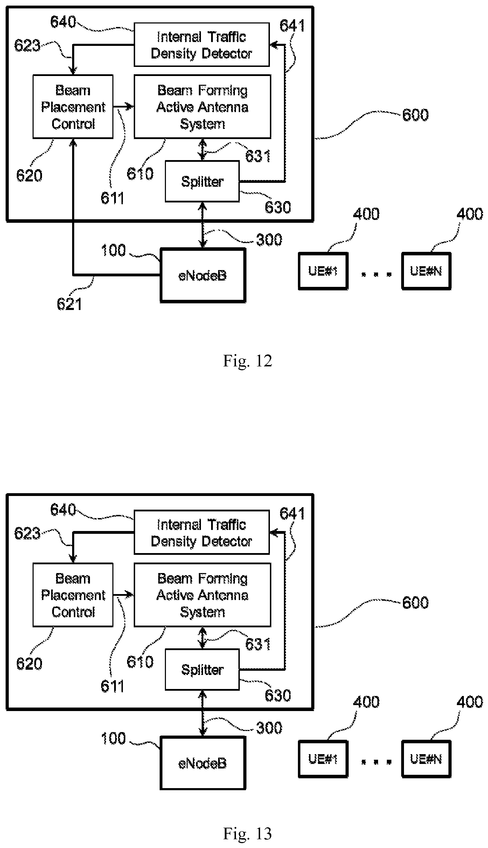

Fig. 12 illustrates the possibility of using a Traffic Density Detector, which resides inside the BFS Radio Bank 600 called Internal Traffic Density Detector 640. This block controls the Beam Placement Control block 620 via an internal line 623. The Internal Traffic Density Detector requires a source of information about the wireless traffic. The only such source available inside the BFS Radio Bank is the Radio Interface Bus 300. In fact, the complete information regarding all cellular traffic for this base station passes through the Radio Interface Bus 300. A signal splitter 630 is necessary to tap this information and send it to the Internal Traffic Density Detector 640 via the line 641. The splitter 630 also connects to the Beam Forming Active Antenna System 610 via the line 631.

Extracting traffic patterns from the Radio Interface Bus signals is a complex operation, which may be performed in the eNodeB, as described earlier. Therefore, an example of Internal Traffic Density detector is a replica of the minimum functionality in the eNodeB to detect traffic patterns. However, simpler methods are available such as monitoring the density of raw radio data flowing through the Radio Interface Bus.

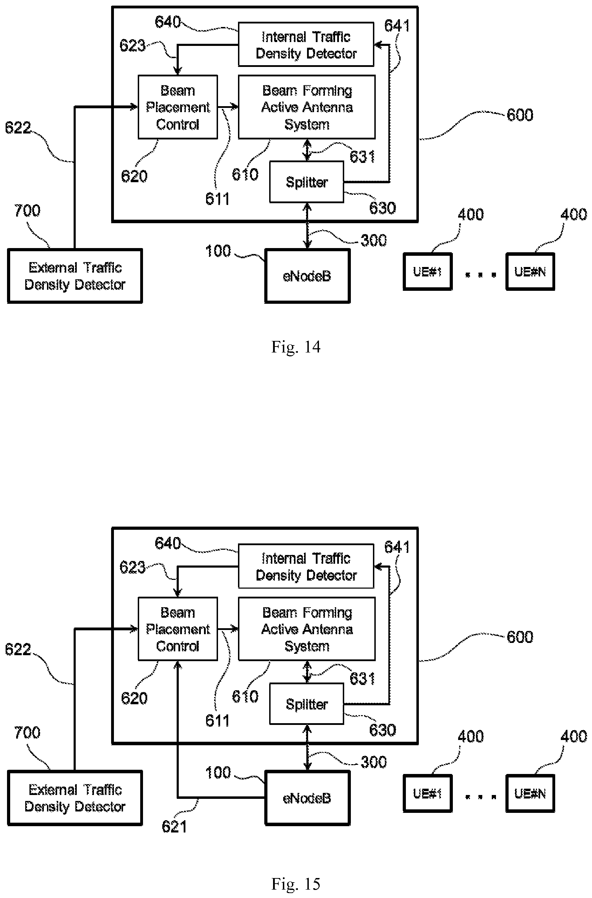

Figs. 13, 14 and 15 show various system configurations in which the beam placement control is provided by various combinations of Internal and External Traffic Density Detectors and eNodeB. The description of the corresponding components in the previously illustrated embodiments applies as well to these figures. As before, appropriate planning of control is necessary to avoid conflicts between the various Traffic Density Detectors.

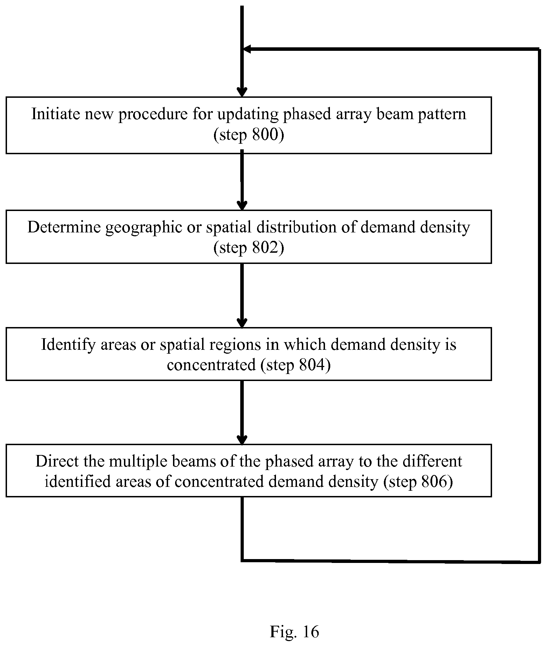

The operation of an exemplary system is illustrated in Fig. 16. A multiple beam phased array that is situated in a geographical area for which cellular communications is being provided generates multiple steerable beams directed to areas of concentration of demand density. Periodically or at predetermined times, the system initiates the process for updating the positions of the multiple communication beams that are generated by the array (step 800). First, the system obtains the most up-to-date information on that demand density (step 802). That may be accomplished by referring to stored information reflecting historical data indicative of measured demand density for the corresponding time slot or by obtaining a direct measurement of the demand density at that time, either from external sources or internally from data that is collected by the base station during operation. (Refer to the different approaches described in greater detail above.)

Upon determining the geographical or spatial distribution of demand density for that time period, the system identifies the areas of greatest demand or the areas in which demand is concentrated (step 804) and then it directs individual communication beams to service those areas (step 806).

At some later time, this process is repeated to steer the beams to other more appropriate areas based upon the change in the geographical or spatial distribution of demand density at that later time.

This process can be performed on regular intervals or at predetermined irregular times. If the system is operating in an environment in which demand density varies continually, updating the system at regular intervals might be appropriate. On the other hand, if historical data indicates that significant changes in demand density typically occur at certain times of the day or week or month, then the system can be programmed to execute the updating procedure at those particular times.

## Claims

1. A method for operating a phased array antenna (610) for a wireless communication system serving a service area in which communications demands from a plurality of mobile communication devices (400) change as a function of time, said method comprising:
for each time period of a plurality of successive time periods,
(1) obtaining information indicative of a total mobile communications demand density as a function of beam direction for that time period (802) by scanning a probe beam over the service area, and while scanning the probe beam over the service area, determining spectrum efficiency, which is a measure of the number of bits transmitted over a unit time over a fixed bandwidth used, as a function of probe beam direction;
(2) using the spectrum efficiency as a function of probe beam direction to provide the obtained information for that time period
(3) using the obtained information to identify a beam direction for which the total mobile communications demand density is high (804) for that time relative to other directions; and
(4) with the phased array antenna, electronically generating a communication beam directed in the identified direction for which total mobile communications demand density is high for that time period relative to other beam directions (806),
wherein the probe beam is a narrow beam, and wherein the communication beam is a narrow beam.

2. The method of claim 1, wherein scanning the probe beam over the service area involves scanning the probe beam over a range of directions wherein the range of directions over which the probe beam is scanned varies both in azimuth and elevation.

3. The method of claim 1, wherein the communication beam has a shape that is selected based on details concerning clustering of the total mobile communications demand density.

4. The method of claim 1, where the generated communication beam is a transmit beam.

5. The method of claim 1, wherein the generated communication beam is a receive beam.

6. The method of claim 1, further comprising:
with the phased array antenna (610), and for each time of the plurality of successive time periods, electronically generating a plurality of communication beams each directed toward a plurality of different directions for which total mobile communications demand density is high for that time relative to other beam directions, wherein the first-mentioned communication beam is among the plurality of communication beams.

7. The method of claim 1, further comprising:
with the phased array antenna (610), and for each time of the plurality of successive times, electronically generating a plurality of communication beams each directed toward a plurality of different directions for which total mobile communications demand density exhibits clustering, wherein the first-mentioned communication beam is among the plurality of communication beams.

8. The method of claim 7, wherein shapes of the communication beams of the plurality of communication beams are selected to match the shapes of the clusters.

## Patentansprüche

1. Verfahren zum Betreiben einer Phased-Array-Antenne (610) für ein drahtloses Kommunikationssystem, das einen Dienstbereich bedient, in dem sich die Kommunikationsanforderungen einer Vielzahl mobiler Kommunikationsvorrichtungen (400) in Abhängigkeit von der Zeit ändern, wobei das Verfahren umfasst:
für jeden Zeitabschnitt einer Vielzahl aufeinanderfolgender Zeitabschnitte,
(1) Erhalten von Informationen, die eine Anforderungsdichte für Mobilkommunikation in Abhängigkeit von der Strahlrichtung für diesen Zeitraum (802) angeben, indem ein Sondenstrahl über den Dienstbereich gescannt wird, und während des Scannens des Sondenstrahls über den Dienstbereich die Spektrumeffizienz bestimmt wird, die ein Maß für die Anzahl der in einer Zeiteinheit über eine verwendete feste Bandbreite übertragenen Bits in Abhängigkeit von der Sondenstrahlrichtung ist;
(2) Verwenden der Spektrumeffizienz in Abhängigkeit von der Sondenstrahlrichtung, um die erhaltenen Informationen für diesen Zeitraum bereitzustellen
(3) Verwenden der erhaltenen Informationen zum Identifizieren einer Strahlrichtung, für die die Anforderungsdichte der Mobilkommunikation zu diesem Zeitpunkt im Vergleich zu anderen Richtungen hoch ist (804); und
(4) mit der Phased-Array-Antenne elektronisches Erzeugen eines Kommunikationsstrahl, der in die identifizierte Richtung gerichtet ist, für die die gesamte Mobilkommunikationsanforderungsdichte für diesen Zeitraum im Vergleich zu anderen Strahlrichtungen hoch ist (806),
wobei der Sondenstrahl ein schmaler Strahl ist, und wobei der Kommunikationsstrahl ein schmaler Strahl ist.

2. Verfahren nach Anspruch 1, wobei das Scannen des Sondenstrahls über dem Dienstbereich das Scannen des Sondenstrahls über einen Bereich von Richtungen umfasst, wobei der Bereich von Richtungen, über den der Sondenstrahl gescannt wird, sowohl im Azimut als auch in der Höhe variiert.

3. Verfahren nach Anspruch 1, wobei der Kommunikationsstrahl eine Form aufweist, die auf der Grundlage von Details bezüglich der Clusterung der gesamten Mobilkommunikationsanforderungsdichte ausgewählt wird.

4. Verfahren nach Anspruch 1, wobei der erzeugte Kommunikationsstrahl ein Übertragungsstrahl ist.

5. Verfahren nach Anspruch 1, wobei der erzeugte Kommunikationsstrahl ein Empfangsstrahl ist.

6. Verfahren nach Anspruch 1, ferner umfassend:
mit der Phased-Array-Antenne (610), und für jeden Zeitpunkt der Vielzahl von aufeinanderfolgenden Zeiträumen elektronisches Erzeugen einer Vielzahl von Kommunikationsstrahlen, die jeweils in eine Vielzahl von unterschiedlichen Richtungen gerichtet sind, für die die Anforderungsdichte an mobiler Kommunikation zu diesem Zeitpunkt relativ zu anderen Strahlrichtungen hoch ist, wobei der erstgenannte Kommunikationsstrahl zu der Vielzahl von Kommunikationsstrahlen gehört.

7. Verfahren nach Anspruch 1, ferner umfassend:
mit der Phased-Array-Antenne (610), und für jeden Zeitpunkt der Vielzahl von aufeinanderfolgenden Zeitpunkten, elektronisches Erzeugen einer Vielzahl von Kommunikationsstrahlen, die jeweils in eine Vielzahl von unterschiedlichen Richtungen gerichtet sind, für die die Anforderungsdichte der mobilen Kommunikation eine Clusterung aufweist, wobei der erstgenannte Kommunikationsstrahl zu der Vielzahl von Kommunikationsstrahlen gehört.

8. Verfahren nach Anspruch 7, wobei die Formen der Kommunikationsstrahlen der Vielzahl von Kommunikationsstrahlen so ausgewählt werden, dass sie den Formen der Cluster entsprechen.

## Revendications

1. Procédé d'exploitation d'une antenne réseau à commande de phase (610) pour un système de communication sans fil desservant une zone de service dans laquelle des demandes de communication provenant d'une pluralité de dispositifs de communication mobiles (400) changent en fonction du temps, ledit procédé comprenant :
pour chaque période de temps d'une pluralité de périodes de temps successives,
(1) l'obtention d'informations indiquant une densité de demande totale de communications mobiles en fonction d'une direction de faisceau pour cette période (802) en balayant un faisceau de sonde sur la zone de service et, tout en balayant le faisceau de sonde sur la zone de service, la détermination d'efficacité spectrale, qui est une mesure du nombre de bits transmis pendant une unité de temps sur une largeur de bande fixe utilisée, en fonction de la direction du faisceau de sonde ;
(2) l'utilisation de l'efficacité spectrale en fonction d'une direction de faisceau de sonde pour fournir les informations obtenues pour cette période de temps
(3) l'utilisation d'informations obtenues pour identifier une direction de faisceau pour laquelle la densité de demande totale de communications mobiles est élevée (804) à ce moment-là par rapport à d'autres directions ; et
(4) avec l'antenne réseau à commande de phase, la génération électronique d'un faisceau de communication dirigé dans la direction identifiée pour laquelle une densité de demande totale de communications mobiles est élevée pour cette période par rapport aux autres directions de faisceau (806),
dans lequel le faisceau de sonde est un faisceau étroit, et dans lequel le faisceau de communication est un faisceau étroit.

2. Procédé selon la revendication 1, dans lequel le balayage du faisceau de sonde sur la zone de service implique le balayage du faisceau de sonde sur une plage de directions, dans lequel la plage de directions sur laquelle le faisceau de sonde est balayé varie à la fois en azimut et en élévation.

3. Procédé selon la revendication 1, dans lequel le faisceau de communication a une forme sélectionnée sur la base de détails concernant le regroupement de la densité de demande totale de communications mobiles.

4. Procédé selon la revendication 1, dans lequel le faisceau de communication généré est un faisceau d'émission.

5. Procédé selon la revendication 1, dans lequel le faisceau de communication généré est un faisceau de réception.

6. Procédé selon la revendication 1, comprenant en outre :
avec l'antenne réseau à commande de phase (610), et pour chaque moment de la pluralité de périodes successives, la génération électronique d'une pluralité de faisceaux de communication dirigés chacun vers une pluralité de directions différentes pour lesquelles la densité de la demande totale de communications mobiles est élevée à ce moment-là par rapport à d'autres directions de faisceau, dans lequel le premier faisceau de communication mentionné fait partie de la pluralité de faisceaux de communication.

7. Procédé selon la revendication 1, comprenant en outre :
avec l'antenne réseau à commande de phase (610), et pour chaque instant de la pluralité d'instants successifs, la génération électronique d'une pluralité de faisceaux de communication dirigés chacun vers une pluralité de directions différentes pour lesquelles la densité de demande totale de communications mobiles présente un regroupement, dans lequel le premier faisceau de communication mentionné fait partie de la pluralité de faisceaux de communication.

8. Procédé selon la revendication 7, dans lequel des formes des faisceaux de communication de la pluralité de faisceaux de communication sont sélectionnées pour correspondre aux formes des grappes.
